# EUROPEAN PATENT APPLICATION

(11) **EP 0 993 944 A2**
(43) Date of publication of application: **19.04.2000**
(21) Application number: 99120549.3
(22) Date of filing: 15.10.1999
(51) Int. Cl.: B32B 29/00, B44C 5/04

(54) **High pressure laminate with three-dimensional appearance**

(30) Priority: 15.10.1998 US 104414
(71) Applicant: INTERNATIONAL PAPER COMPANY, Odenton, MD 21113-1397 (US)
(72) Inventor: Kostrzewski, Witold, c/o Int. Paper Company, Statesville, North Carolina 28687 (US); Franzoi, Eric A., Pasadena, Maryland 21122 (US); Isom, Tahira S., Baltimore, Maryland 21216 (US); Lex, Joseph, Pasadena, Maryland 21122 (US)
(74) Representative: Becker Kurig Straus

(57) **Abstract**

High pressure decorative laminate having a deep three-dimensional appearance has an upper overcoating which contains particles of precured melamine resin and pearlescent pigment in a relatively thick matrix of subsequently cured melamine resin.

## Description

This application claims benefit of the priority of provisional application 60/104,414, filed October 15, 1998

### Field of Invention

The present invention relates to decorative laminates, more particularly high pressure decorative laminates which have both a flat surface and a three-dimensional surface appearance.

### Background

High pressure decorative laminates having abrasion, gouge and scratch resistance are known, including those disclosed in patents in the name of O'Dell et al 5,344,704 and 5,545,476, among others. The '704 and '476 patents, the contents of which are hereby incorporated by reference, are based on the provision of a protective upper smooth coating on the laminate which is formed in part of pre-cured resin particles suspended in a matrix of laminating resin having the same or approximately the same index of refraction as the laminating resin. For improved abrasion resistance, hard mineral particles may also be present, and for improved processing a suspension agent, which also acts as a temporary or initial binder material, should also be present. The protective overcoating is substantially transparent, and the appearance of the laminate is provided by the underlying decor sheet which may be printed in a pattern or which may be a solid color, as are well known.

High pressure decorative laminates with a three-dimensional appearance have been suggested in the past, noting the Ungar U.S. patents 4,092,199, reissued as Re 31,373, and Ungar et al 4,154,882, where a three-dimensional effect is provided by imparting a deep texture or embossing into the upper surface of the laminate, and particularly by registering color and embossing. These laminates do not have flat surfaces which are often desirable.

Mier USP 5,047,282 discloses a translucent and variegated decorative laminate having a three-dimensional or depth appearance effect, this being accomplished by the use of two or more decor sheets stacked one upon the other, which decor sheets differ from the conventional decor sheets, i.e. "with printed variegation or translucent color and printed variegation", together with at least two or more translucent intermediate sheets inserted between the decor sheets. The resultant laminate is said to provide a simulated marble or alabaster appearance giving the impression of depth as a result of the incorporation of the decor sheets with variegated designs at different levels within the laminate.

Three dimensional effects are commonly provided in floor and wall coverings formed from thermoplastic materials. Among these there may be briefly mentioned the patents to Wacker 3,194,859; Bowen et al 4,717,620; Manning et al 4,916,007; and Lussi at al 5,246,765 and 5,290,591. The properties of thermoplastics are of course very different than the properties of cured resins, and the thermoplastic products do not possess the abrasion, gouge and scratch resistance of high pressure decorative laminates.

U.S. patents 5,266,384 and 5,466,511, both in the name of O'Dell et al, relate to high pressure decorative laminates which are said to provide a brilliant visual appearance which is remarkable for its rich depth of color and luster. This is accomplished by the utilization of two dissimilar resins, referred to as an impregnating resin and a coating resin, which will melt and flow under heat and pressure, i.e. the coating resin is either uncured if it is a thermoplastic, or only partially cured if it is thermosetting. During the laminating process, due to melting and flow of the resins prior to curing of the impregnated laminating resin (and full curing of the coating resin if it is thermosetting), an appearance is provided which is said to be "pearlescent" due to differences in refractive index of the components of the coating.

### Related Application

Copending application 09/017,147, the contents of which are hereby incorporated by reference, constitutes a variation of the aforementioned O'Dell et al U.S. patents '704 and '476, wherein the concentration of precured resin particles, employed in the protective overcoating and retained in a cured matrix of the same or similar resin having the same or similar refractive index, is considerably increased relative to the embodiments disclosed in U.S. patents '704 and '476, so as to give a surprisingly improved chemical resistance. However, these laminates, like the embodiments disclosed in '704 and '476, show little three-dimensional effect, except for the pattern provided by the decor sheet and the depth provided by the relatively thick protective overcoating.

### Summary of Invention

It is therefore an object of the present invention to overcome deficiencies in the prior art, such as indicated above.

A further object is to provide a decorative laminate which can be produced in a variety of visual three-dimensional appearances.

Another object is to provide a high pressure decorative laminate meeting all the requisite NEMA standards, and also having a three-dimensional appearance even if the upper surface is flat or substantially flat.

These and other objects are brought about by the discovery that a high pressure decorative laminate of excellent physical properties and yet having a deep three-dimensional appearance can be achieved by a further variation of the process of U.S. patents '704 and '476, constituting also a variation of the aforementioned copending application. Thus, the present invention broadly relates to a gouge, abrasion and scratch resistant high pressure decorative laminate with a three-dimensional appearance.

More specifically, the illusion of three dimensions is achieved by incorporating into the protective overlayer, i.e. a thick surface layer of the impregnating or laminating resin containing a high concentration of precured resin particulates of the same resin as the laminating resin, also 2-110 parts of pearlescent or nacreous pigments suspended in the laminating resin per 100 parts of solids of said laminating resin (phr), preferably 7-80 phr. An underlying decor sheet can also be used in the conventional way to provide background color. The resultant laminate has a flat surface and can be either glossy or provided with a relatively dull (matte) finish by formation against a texturized die or a texture imparting separator sheet.

### Detailed Description of Embodiments

A thick surface layer is achieved by using a thick layer of melamine resin containing a high concentration of pre-cured melamine particulates. That resin layer is very clear and also contains 3-110 phr (parts per hundred of resin) of at least one pearlescent or nacreous pigment that appear to be suspended in a three-dimensional medium. The underlying decor sheet is partially visible and provides the background color. The surface is also gouge and scratch resistant without scratching caul plates during pressing.

The basic formulation can consist of a conventional water solution of uncured melamine resin (desirably 50-60% solids) blended with 2-120 phr (parts per hundred of uncured resin solids) pre-cured melamine particulates preferably of spherical shape in a diameter of 50-120 µm, preferably 3-100 phr, and the aforementioned pigment(s). Fumed silica can be added in the ratio of 4-10 phr to adjust viscosity and improve the suspension characteristics of the pre-cured melamine particulates in the uncured resin. Other suspension agents such as clay (laponite), microcrystalline cellulose, sodium alginate, etc. can be used in place of the fumed silica. Other additives may also be present, e.g. alumina and/or other abrasion resistant mineral particles.

The pigment particles vary in sizes between 10 µm and 500 µm. Dependent on the expected look, we can add more smaller size pigment to improve luster or larger size pigment to enhance the appearance of 3-D look. Other components which are required to make a well cured laminate such as catalyst, foam suppressors, surfactants and waxes can be added if necessary or desirable.

A wide variety of pigments can be used according to the present invention, but it is preferred that at least some of the pigment constitute pigment of the type which is commonly referred to as pearlescent or nacreous. Metallic pigments are also desirably used. The pearlescent or nacreous pigments used in the present invention can be routinely selected from among those commercially available. In addition to the terms "pearlescent" and "nacreous" used to define these pigments, other terms include "opalescent", "interference pigments" and "thermochromatic pigments". One type of particularly desirable pigment constitutes a commercially available pigment which constitutes mica flakes of 5-50 µm which are coated with an extremely thin layer (angstrom thickness) of metallic oxide, e.g. titanium oxide, ferrous oxide or tin oxide, such pigments having a generally iridescent appearance.

The formulation can be applied to either unimpregnated or pre-impregnated overlay sheet or decor sheet. In either event, it is desirable but not essential to provide a relatively thick coating on the uppermost layer, whether it is a decor sheet or an overlay sheet, as a thicker coating accentuates the three-dimensional effect, particularly in conjunction with a substantially transparent overlay and/or a patterned or solid colored decor sheet. Plural coating layers may be applied, each containing a different pigment or pigments. The formulation itself can be applied in a pattern, such as by a silk-screening technique, so as to provide even additional patterns and visual effects.

When the formulation is applied either to a previously unimpregnated overlay paper or decor sheet to provide simultaneous impregnation and coating, it is desirably applied in such a quantity so as to give 75% to 86% resin content after drying. The rate of application can be adjusted according to the precise formulation and the desired visual effect, but in general the maximum application rate should not exceed about 60 lbs/ream (a ream is 3,000 ft/²) of formulation containing no more than about 20 lbs/ream of the precured melamine particles.

In another variation, the decor and/or overlay paper may be pre-impregnated and coated according to O'Dell '704 or '476, and then overcoated with a solution of uncured melamine resin containing the nacreous or pearlescent pigment, and then dried prior to lamination. Again, plural layers may be applied to obtain different visual effects. When the formulation is applied to overlay or decor paper which has previously been saturated with the solution of uncured melamine resin, and then optionally dried to a tacky state, the coating composition can then be applied as a lower rate because no liquid resin is needed to impregnate the already previously impregnated overlay or decor paper.

If overlay is used, the coated overlay paper is put over any melamine resin presaturated or unsaturated decor sheet and pressed with a phenolic core using standard pressing conditions of pressure, temperature and time. Alternatively, coated decor sheet, absent the use of coated overlay paper, is pressed against the phenolic core the same way under standard pressing conditions. Both methods provide a high pressure laminate having a thick layer of clear cured melamine resin containing pearlescent pigments in one or more colors on the top of the paper. The laminate possesses an excellent gouge and scratch resistance and meets all NEMA requirements for a high pressure decorative laminate.

As the melamine resin solids, other than the precured melamine resin particles, are only at most partially cured to the B-stage prior to lamination, such melamine resin flows under the effects of heat and pressure during the initial stages of the laminating procedure. During such flow, different pigments in different layers tend to flow between respective layers in an irregular fashion so as to provide arbitrary patterns. In addition, procured melamine resin particles, which may initially be located in a layer below the uppermost layer, also migrate during the initial stages of the laminating procedure to become intermixed with the pigment throughout the depth of the top layer coating in the completed laminate, which contributes to the three-dimensional depth of the pattern produced in the laminate surface.

The greater the proportion of the precured melamine resin particles utilized, the greater the three-dimensional effect due to the transparency of the cured melamine resin. On the other hand, if the quantity of precured melamine resin particles becomes too great, other physical properties of the laminate begin to deteriorate. The maximum quantity of precured melamine resin particles in the final product will vary depending on other compositional factors, including the proportion and nature of the particular pigment or pigments used, and the presence or absence or other components such as alumina particles and the quantity thereof, but the maximum quantity of precured rosin particles can be routinely tested on a case-by-case basic.

Melamine resin coated overlay can be pressed over a variety of decor sheets providing different colors and patterns.

Melamine resin coated decor sheets can be pressed like regular created decor sheets eliminating the cost of overlay.

Two melamine resin coated overlay sheets with the same or different pigment loading can be pressed one over another one, in the same or cross direction, to provide more depth and a different look.

Other substitutions can also be made, e.g. other thermosettable resins can be used in place of melamine resin, but are not preferred.

The following specific examples, presented illustratively but not intended to be limitative, will further reveal the objects and nature of the present invention:

### Example 1 (Comparative)

A coating composition was prepared comprising 83 grams of uncured liquid melamine impregnating resin containing 50 grams of resin solids, 50 grams of nacreous pigment particles and 50 grams of spherical pre-cured melamine resin particles in a water slurry. The viscosity of the mixture was too high to be conveniently used.

### Example 2

The formulation of Example 1 was changed by reducing the quantity of pigment particles to 39 grams. Three batches were prepared using three different nacreous pigments identified respectively as Nacreous Silver 70, Nacreous Luster Shimmer 110 and Nacreous Sparkle 190. Each of these three formulations was coated on a pre-impregnated overlay at an application rate of 59 lbs/ream; a ream is equal to 3,000 ft². The application rate for each of the uncured resin solids and the precured resin particles was 21.22 lbs/ream, and for the nacreous pigment was 16.55 lbs/ream, in each run.

The coatings were dried, and the so-prepared overlays were each assembled above a pre-impregnated print sheet and pressed to obtain laminate having a deep, three-dimensional appearance and a flat upper surface.

### Example 3

Three additional runs were conducted similar to Example 2, in this case with the quantity of nacreous pigment being reduced to 20 grams. The pigments used were respectively nacreous pigment 70, nacreous pigment 110, and a mixture of 10 grams each of nacreous pigments 70 and 110. In the first run using pigment 70, the mixture was laid down on the pre-impregnated overlay sheet at a rate of 27 lbs/ream; in the second run containing nacreous pigment 110, the mixture was laid down at a rate of 41 lbs/ream; and in the third run, using the mixture of pigments, the mixture was laid down at a rate of 33 lbs/ream.

After drying, each coated overlay was pressed on top of a pre-impregnated print sheet to produce high pressure decorative laminate having a deep three-dimensional appearance.

### Example 4

Two substantially similar formulations were prepared containing 10 grams of two different pigments, each formulations also comprising 190 grams of uncut uncured melamine resin of 55% solids. An substrate there were used treated decor paper, i.e. a solid green decor paper sheet and a solid red decor paper sheet, these having been precoated and pre-impregnated with a composition according to the aforementioned O'Dell et al USP 5,344,704 containing, in addition to the uncured melamine impregnating and laminating resin, 15 parts by weight of Avicel, 44 parts by weight of alumina particles and 44 parts by weight of precured melamine resin particles, such precured resin particles being present at a coating rate of 3 lbs/ream.

The pre-treated decor paper substrates were then coated with a first formulation as indicated above in which the pigment was Mearlin Hilite Blue, and the coatings were dried to a sticky state. Then a second of the above formulation, this one containing a pigment identified Spectral Pearl, was applied. The two substrates were then oven-dried for 60 seconds. These decor sheets were then used to form two laminates by pressing against a peen plate adjacent three phenolic resin impregnated core sheets at 280°F for 18 minutes to obtain high pressure decorative laminate having a deep three-dimensional appearance.

### Example 5

A sheet of solid pink decor paper, previously impregnated with uncured melamine resin solution, and dried, was used as the substrate. Two coating formulations are prepared, each containing 10 parts by weight of pigment and 190 parts by weight of a slurry containing 1 part by weight of Avicel, 3 parts by weight of alumina particles, 3 parts by weight or precured melamine resin particles, and 88 parts by weight of uncured melamine resin solids.

A first of these formulations was then coated over the pre-impregnated pink decor sheet at a rate of 2.36 lbs of precured resin particles per ream and 7.53 lbs of pigment per ream. This coating was air dried and then a second of the above-noted formulations with a different pigment (Inca gold) was applied over the first coating. The so-double coated pink decor sheet was then oven dried for 60 seconds, and pressed into laminate in the same manner as indicated in Example 4 above to produce a laminate having a substantially flat surface and a deep three-dimensional pattern.

### Example 6

Two samples ware prepared as follows: a coating formulation was prepared having the same components as in Example 5. In one run this composition is coated on previously unimpregnated decor paper at the same rate as mentioned above in Example 5. In the second run, this composition was coated onto previously impregnated overlay paper at the same rate. The so coated decor paper and overlay paper are oven dried for 60 seconds.

In the first run, the previously dry decor paper, at this stage coated and impregnated with the aforementioned formulation, is laid up and pressed in an assembly including phenolic resin saturated core paper as described in Example 4 to provide a high pressure decorative laminate without overlay, having a deep three dimensional appearance.

In the second run, the coated and impregnated overlay is laid up over a sheet of unimpregnated decor paper with phenolic resin impregnated core paper therebeneath as in Example 4, and the assembly is pressed under the same conditions as in Example 4, namely 280°F for 18 minutes. Again, a high pressure decorative laminate having a flat upper surface is obtained having a deep, three-dimensional appearance.

The foregoing description of the specific embodiments will so fully reveal the general nature of the invention that others can, by applying current knowledge, readily modify and/or adapt for various applications such specific embodiments without undue experimentation and without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. The means, materials, and steps for carrying out various disclosed functions may take a variety of alternative forms without departing from the invention.

Thus the expressions "means to..." and "means for...", or any method step language, as may be found in the specification above and/or in the claims below, followed by a functional statement, are intended to define and cover whatever structural, physical, chemical or electrical element or structure, or whatever method step, which may now or in the future exist which carries out the recited function, whether or not precisely equivalent to the embodiment or embodiments disclosed in the specification above, i.e., other means or steps for carrying out the same function can be used; and it is intended that such expressions be given their broadest interpretation.

## Claims

1. A high pressure decorative laminate meeting NEMA standards, having superior scratch and gouge resistance as well as abrasion resistance, and being chemically resistant, said high pressure decorative laminate having a three-dimensional appearance, comprising:
a substrate, a decor sheet laminated to said substrate, an optional overlay sheet over and above and laminated to said decor sheet when said overlay is present, and a protective overlayer over said overlay when present and over and in contact with said decor sheet when said overlay is not present;
said protective overlayer comprising precured resin particles in an amount of 50-120 parts and 3-50 parts of pearlescent pigments, said precured resin particles and said pearlescent pigments being suspended in a cured matrix of laminating resin, and wherein the precured resin particles and the cured resin matrix have the same or approximately the same index of refraction.

2. A laminate according to claim 1 wherein both said cured matrix and said precured resin particles are of melamine resin, and have the same index of refraction,

3. In a laminate having a surface which meets NEMA standards for high pressure decorative laminate and comprising a substrate, a decor sheet laminated to said substrate, an optional overlay sheet over and above and laminated to said decor sheet when said overlay is present, and a coating over said overlay when present and over and in contact with said decor sheet when said overlay is not present, the improvement
wherein: said overlayer contains both precured resin particles and pearlescent pigments suspended in a cured matrix of laminating resin, said precured resin particles and said cured resin matrix having the same or approximately the same index of refraction.

4. A laminate according to claim 3 wherein both said cured matrix and said precured resin particles are of melamine resin, and have the same index of refraction.

5. The laminate according to claim 4 wherein said overlayer also contains at least one of abrasion resistant mineral particles and a thickening agent.

6. The laminate of claim 5 wherein both said thickening agent and said abrasion resistant particles are present in said overlayer, and said abrasion resistant particles comprise alumina particles.

7. The laminate of claim 5 wherein said abrasion resistant particles are present in said overlayer, and said abrasion resistant particles comprise alumina.

8. The laminate according to claim 4 wherein said pearlescent pigment comprises at least two different pigment colors.

9. The method of claim 4 wherein said overlay is present and has said coating thereon.

10. The laminate according to claim 4 wherein said optional overlay is not present, and said coating is on said decor sheet.

11. A method for making a laminate according to claim 3, comprising;
coating a decor paper, optionally pre-impregnated with laminating resin and optionally coated with an overcoating containing said precured resin particles, with a formulation containing said laminating resin and at least one pearlescent pigment; or coating said formulation on overlay paper, optionally pre-impregnated with laminating resin and optionally having an overcoating thereon containing said laminating resin and said precured resin particles; said formulation also containing said precured resin particles if precured resin particles are already present in said overcoating layer, or said precured resin particles being mandatorily present in said formulation when not present in said overcoating;
at least partially drying said coated formulation;
optionally applying a second and similar formulation to said first formulation, said second formulation containing a different pearlescent pigment from said pearlescent pigment of first formulation;
drying said coated and impregnated decor sheet or overlay sheet;
assembling said coated overlay sheet or said coated decor sheet as the uppermost layer in an assembly of plies; and
laminating under heat and pressure.
